# EUROPEAN PATENT APPLICATION

(11) **EP 2 197 185 A2**
(43) Date of publication of application: **16.06.2010**
(21) Application number: 09158402.9
(22) Date of filing: 21.04.2009
(51) Int. Cl.: H04M 1/725, G06F 1/16

(54) **Electronic system with a mobile device and an expansion device**

(30) Priority: 10.12.2008 US 331649
(71) Applicant: Bandrich Inc., Taipei County 23146 (TW)
(72) Inventor: Kuo, Wen-Yi, 114, Taipei City (TW); Chou, Der-Hwa, 23446, Taipei County (TW); Yu, Jui-Ming, 23146, Taipei County (TW)
(74) Representative: Lang, Christian

(57) **Abstract**

An electronic system (1) is provided. The electronic system comprises: a processor (10), a mobile device (11), a plurality of expansion ports (12) and an expansion device (13). The mobile device can work as a standalone system, wherein the mobile device comprises a plurality of first function modules. The expansion device comprises a plurality of second function modules, wherein the expansion device connects to the mobile device through the plurality of expansion ports. When the mobile device and the expansion device are connected together to form the electronic device, the first processor controls the electronic system to perform the plurality of first and second function modules.

## Description

### BACKGROUND

### Field of Invention

The present invention relates to an electronic system. More particularly, the present invention relates to an electronic system with a mobile device and an expansion device.

### Description of Related Art

There has been a strong need for a mobile device such as a cell phone or a PDA to be small enough to carry along easily and at the same time be powerful enough for experiencing similar look-and-feel (for example, large LCD) and complex functions as those on a laptop or PC. However, it is easily seen that these two requirements conflict. The shrinking of the size of the mobile devices makes it hard to implement a large display panel and a circuit board providing complex functions. So far, there is no satisfying form factor announced by any handset manufacturer yet.

Accordingly, what is needed is an electronic system to provide the convenience, large display panel and complex functions at the same time to overcome the above issues. The present invention addresses such a need.

### SUMMARY

An electronic system is provided. The electronic system comprises: a processor, a mobile device, a plurality of expansion ports and an expansion device. The mobile device can work as a standalone system, wherein the mobile device comprises a plurality of first function modules. The expansion device comprises a plurality of second function modules, wherein the expansion device connects to the mobile device through the plurality of expansion ports. When the mobile device and the expansion device are connected together to form the electronic system, the processor controls the electronic system to perform the function of the plurality of first and second function modules.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1A shows a block diagram of the electronic system of the first embodiment of the present invention;
Fig. 1B shows a block diagram of the electronic system of the second embodiment of the present invention;
Fig. 2A shows another block diagram of the electronic system with display screens of the present invention;
Fig. 2B shows another block diagram of the electronic system with display screens and keypads of the present invention;
Fig. 3A and 3B show another block diagram of the electronic system with battery modules of the present invention;
Fig. 4 shows another block diagram of the electronic system with antennas of the present invention;
Fig. 5 shows another block diagram of the electronic system with USB ports of the present invention;
Fig. 6A shows a perspective view of the electronic system of the present invention;
Fig. 6B shows another perspective view of the electronic system of the present invention;
Fig. 6C shows another perspective view of the electronic system of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

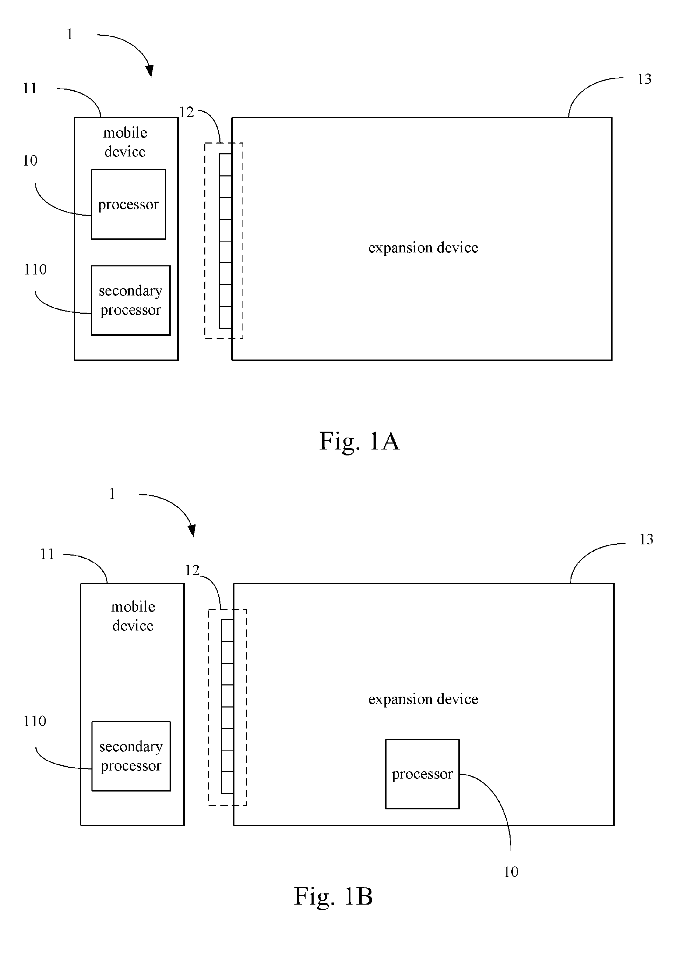

Fig. 1A shows a block diagram of the electronic system 1 of the first embodiment of the present invention. The electronic system 1 comprises: a processor 10, a mobile device 11, a plurality of expansion ports 12 and an expansion device 13. The mobile device 11 can work as a standalone system. The mobile device 11 has its own processor and its own input interface to deal with its own function modules, e.g. a cell phone, a PDA or other mobile devices. The mobile device 11 comprises a plurality of first function modules (not shown). The expansion device 13 comprises a plurality of second function modules (not shown), wherein the expansion device 13 connects to the mobile device 11 through the plurality of expansion ports 12. When the mobile device 11 and the expansion device 13 are connected together to form the electronic system 1, the processor 10 controls the electronic system 1 to perform the function of the plurality of first and second function modules.

The processor 10 in the present embodiment is in the mobile device 11 as depicted in Fig. 1A. The mobile device 11 further comprises a secondary processor 110. With a dual processor setting, the data processing ability of the mobile device 11 reinforces. But it's noticed that the secondary processor 110 is not a necessary element of the mobile device 11.

In a second embodiment as depicted in Fig. 1B, the processor 10 can be in the expansion device 13. When the processor 10 is in the expansion device 13, the processor in the mobile device 11 acts as a secondary processor 110. The processor 10 in the expansion device 13 substantially controls the electronic system 1. The expansion device 13 can be a standalone system such as a PC or a notebook computer to adapt the mobile device 11 as a wireless communication device of the PC or the notebook computer.

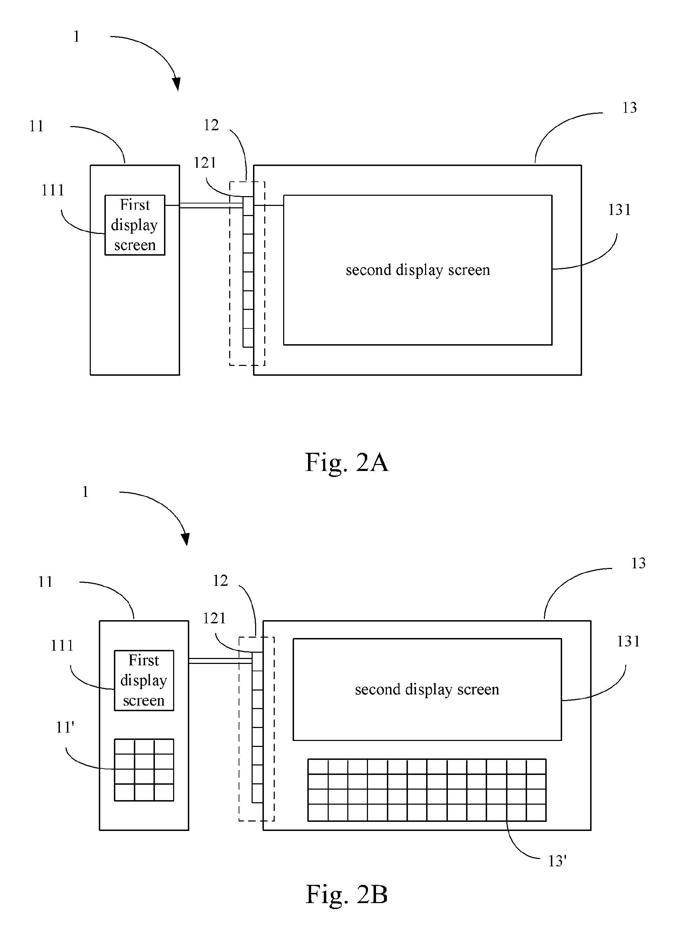

Fig. 2A shows another block diagram of the electronic system 1. The plurality of first function modules of the mobile device 11 comprises a first display screen 111, the plurality of expansion ports 12 comprises a display expansion port 121, and the plurality of second function modules of the expansion device 13 comprises a second display screen 131 connected to the mobile device 11 through the display expansion port 121. The second display screen 131 has a larger display area than the first display screen 111. When the mobile device 11 and the expansion device 13 are connected together, the electronic system 1 shows the information of the electronic system 1 on the second display screen 131. In other words, a user can use the first display screen 111 when the system is the standalone mobile device 11 for convenience or use the second display screen 131 when the system is the electronic system 1 for larger display screen. Further, both the mobile device 11 and the expansion device 13 can have at least one input interface. Fig. 2B shows an embodiment of the electronic system 1 with a keypad 11' and a keypad 13' on the mobile device 11 and on the expansion device 13 respectively.

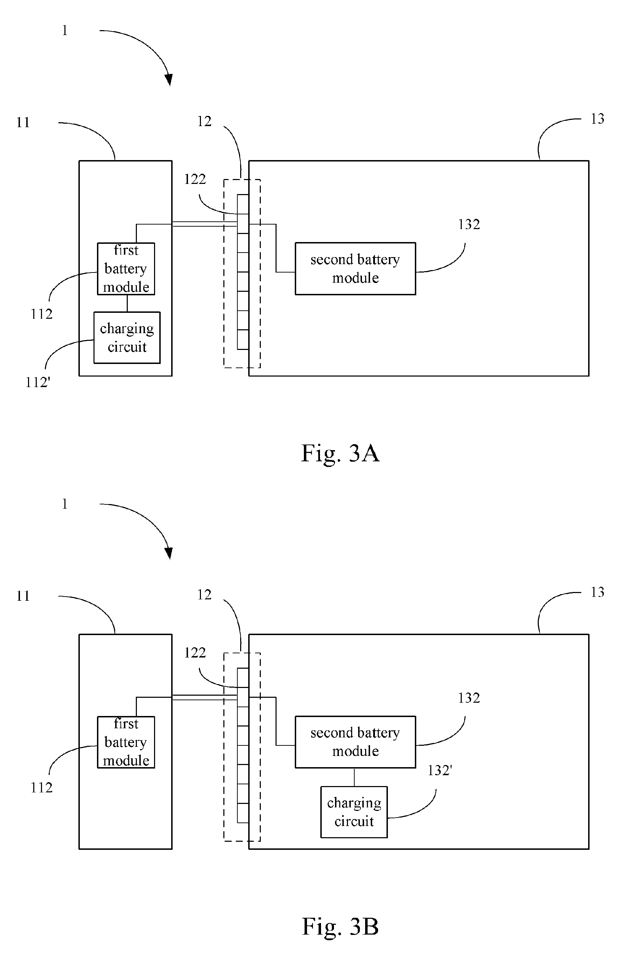

Fig. 3A shows another block diagram of the electronic system 1. The plurality of first function modules of the mobile device 11 comprises a first battery module 112, the plurality of expansion ports 12 comprises a battery expansion port 122, and the plurality of second function modules of the expansion device 13 comprises a second battery module 132 connected to the mobile device 11 through the display expansion port 122. When the mobile device 11 and the expansion device 13 are connected together, both the first and the second battery modules 112, 132 provide the power of the electronic system 1. In the present embodiment, the plurality of first function modules further comprises a charging circuit 112' to connect to an external power source (not shown) and the first battery module 112 to charge the first battery module 112 directly and charge the second battery module 132 through the battery expansion port 122. In other embodiment, as depicted in Fig. 3B, the charging circuit 132' is in the expansion device 13 to charge the second battery module 132 directly and charge the first battery module 112 through the battery expansion port 122.

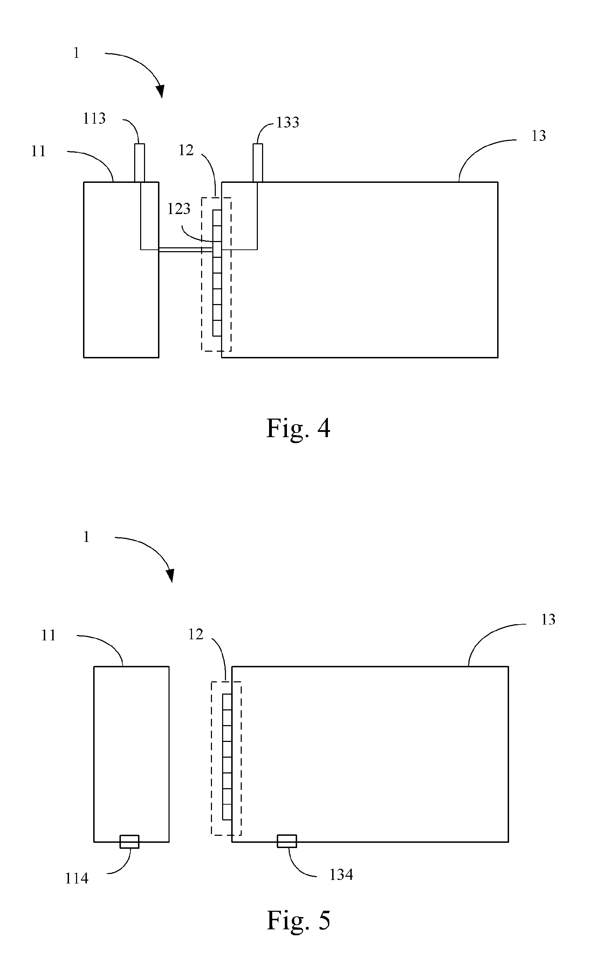

Fig. 4 shows another block diagram of the electronic system 1. The plurality of first function modules of the mobile device 11 comprises a first antenna 113 for wireless communication. The plurality of the expansion ports 12 further comprises an antenna expansion port 123 and the plurality of second function modules of the expansion device 13 further comprises a second antenna 133 for wireless communication, wherein the second antenna 133 is adapted to different wireless communication technology from the first antenna 113. When the mobile device 11 and the expansion device 13 are connected together, both the wireless communication technology of the first and second antenna 113, 133 are used. The first antenna is adapted to the wireless technology such as: GSM, GPRS, EDGE, WCDMA, HSDPA, HSUPA, HSPA+, LTE, WiMax, WiFi, Bluetooth and GPS. The second antenna is adapted to the wireless technology such as: GPS, DVB-T and DVB-H.

Fig. 5 shows another block diagram of the electronic system 1. The plurality of first function modules of the mobile device 11 comprises an USB port 114. There are two major types of USB port: (1) A USB port acts as a client for data transfer or power charging and (2) A USB port supports On-the-go technology and acts as a host for data transfer. The type and the number of the USB port can be easily modified by people who are skilled in the art. The plurality of second function modules of the expansion device 13 also comprises an USB port 134 as described above, and the type and the number of the USB port on the expansion device 13 can also be easily modified by people who are skilled in the art.

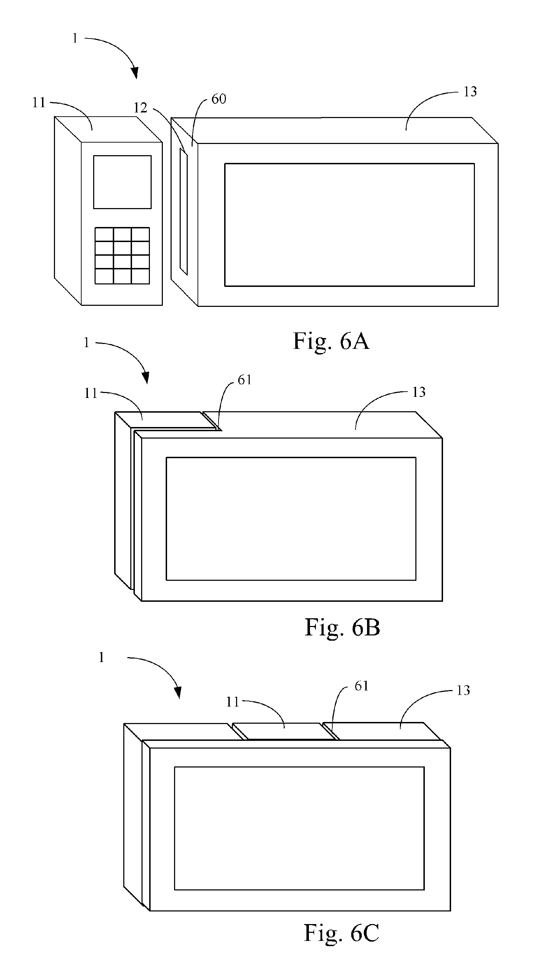

Fig. 6A shows a perspective view of the electronic system 1 of the present invention. The plurality of expansion ports 12 is formed on a sidewall 60 of the expansion device 13 to make the mobile device 11 to connect to the expansion device 13. Fig. 6B is another perspective view of the electronic system 1 of the present invention. A chamfer 61 is formed on the expansion device 13, wherein the plurality of expansion ports 12 is formed in the chamfer, the mobile devices is adapted to the chamfer 61 and connects to the expansion device 13. The chamfer 61 can be formed in one corner of the expansion device 13 as depicted in Fig. 6B, or in the middle part of the expansion device 13 as depicted in Fig. 6C.

The electronic system of the present invention provides a user the convenience to carry with him/her the necessary gadgets under different situations. This solution is much more cost-effective, portable, and flexible when compared to carrying two full-functional mobile devices, one mobile phone and one PDA, for example.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. An electronic system comprising:
a processor;
a mobile device that can work as a standalone system, wherein the mobile device comprises a plurality of first function modules;
a plurality of expansion ports;
an expansion device comprising a plurality of second function modules, wherein the expansion device connects to the mobile device through the plurality of expansion ports;
when the mobile device and the expansion device are connected together to form the electronic system, the processor controls the electronic system to perform the function of the plurality of first and second function modules.

2. The electronic system of claim 1, wherein the processor is in the mobile device.

3. The electronic system of claim 2, wherein a secondary processor is further comprised in the mobile device or the expansion device.

4. The electronic system of claim 3, wherein when the secondary processor is comprised in the expansion device, the expansion device is a standalone computer system, wherein when the mobile device and the computer system are connected together, the mobile device acts as a wireless communication device of the computer system.

5. The electronic system of claim 1, wherein the plurality of first function modules comprises a first display screen; the plurality of expansion ports comprises a display expansion port; and the plurality of second function modules comprises a second display screen connected to the mobile device through the display expansion port, wherein the second display screen has a larger display area than the first display screen, and when the mobile device and the expansion device are connected together, the electronic system shows the information of the electronic system on the second display screen.

6. The electronic system of claim 1, wherein the plurality of first function modules comprises a first battery module; the plurality of expansion ports comprises a battery expansion port; and the plurality of second function modules comprises a second battery module connected to mobile device through the battery expansion port, when the mobile device and the expansion device are connected together, both the first and the second battery modules provide the power of the electronic system.

7. The electronic system of claim 6, wherein the plurality of first function modules further comprises a charging circuit to connect to an external power source and the first battery module to charge the first battery module directly and charge the second battery module through the battery expansion port.

8. The electronic system of claim 6, wherein the plurality of second function modules further comprises a charging circuit to connect to an external power source and the second battery module to charge the second battery module directly and charge the first battery module through the battery expansion port.

9. The electronic system of claim 1, wherein the plurality of first function modules further comprises a first antenna for wireless communication, the expansion ports further comprise an antenna expansion port and the plurality of second function modules further comprises a second antenna for wireless communication, and when the mobile device and the expansion device are connected together, both the wireless communication technology of the first and second antenna are used.

10. The electronic system of claim 9, wherein the first antenna is adapted to the wireless technology such as: GSM, GPRS, EDGE, WCDMA, HSDPA, HSUPA, HSPA+, LTE, WiMax, WiFi, Bluetooth and GPS and the second antenna is adapted to the wireless technology such as: GPS, DVB-T and DVB-H.

11. The electronic system of claim 9, wherein the first antenna functions as a main antenna and the second antenna functions as a receive diversity antenna.

12. The electronic system of claim 1, further comprising at least one USB port acting as a client for data transfer or power charging or acting as a host supporting On-the-go (OTG) technology for data transfer.

13. The electronic system of claim 1, wherein at least one input interface is comprised in the mobile device or the expansion device to input information into the electronic system.

14. The electronic system of claim 1, wherein the plurality of expansion ports is formed on a sidewall of the expansion device to make the mobile device connect to the expansion device.

15. The electronic system of claim 1 further comprising a chamfer formed on the expansion device, wherein the plurality of expansion ports is formed in the chamfer, the mobile devices is adapted to the chamfer and connects to the expansion device.
